Europäisches Patentamt

European Patent Office

Office européen des brevets

(11) Publication number: **0 069 177**
**B1**

(12) **EUROPEAN PATENT SPECIFICATION**

(45) Date of publication of patent specification: **27.05.87**

(21) Application number: **81303080.6**

(22) Date of filing: **06.07.81**

(51) Int. Cl.⁴: **A 61 C 5/10, B 29 C 51/08**

(54) **Device for production of temporary dental crowns.**

(43) Date of publication of application:
**12.01.83 Bulletin 83/02**

(45) Publication of the grant of the patent:
**27.05.87 Bulletin 87/22**

(84) Designated Contracting States:
**CH DE FR GB IT LI NL SE**

(56) References cited:
**DE-A-2 753 448**
**DE-B-2 011 000**
**US-A-3 470 291**
**US-A-3 682 571**
**US-A-3 916 525**
**US-A-4 162 625**

(73) Proprietor: **DSO "PHARMACHIM"**
**16, Iliensko Chaussee**
**Sofia (BG)**

(72) Inventor: **Chervenelekov, Theo Simeonov**
**35, Boul.Skobelev**
**Sofia (BG)**

(74) Representative: **Silverman, Warren et al**
**HASELTINE LAKE & CO. Hazlitt House 28**
**Southampton Buildings Chancery Lane**
**London WC2A 1AT (GB)**

Courier Press, Leamington Spa, England.

# Description

This invention relates to a device for the production of temporary dental crowns which are utilised in everyday dental practice for the protection of filled teeth during dental restoration work and in particular for one-visit restoration of broken teeth.

A device is known for use in the production of temporary dental crowns. This device is a vacuum-press with a matrix opening, the temporary dental crowns being pressed under a vacuum from plastics foil which has been softened in advance.

A disadvantage of this device is that only a series of standard crowns can be produced. These are rather difficult to fit to an individual broken tooth since the shape of a crown produced thereby is unlikely to bear much relationship to the individual characteristics of a particular tooth. Hence, a large quantity of material may be accumulated around the tooth being restored or the space around the tooth may not be filled sufficiently, this leading to trauma and inflammation.

In addition, a method for the production of cast metal crowns is known in which, in an intermediate stage, a crown is made from plastics foil. This is filled with gypsum and used as a die for casting the metal crowns. The device for the production of the plastics crowns itself includes a gypsum die having the shape of a tooth and a matrix which is cup shaped and filled with plastics material.

A disadvantage of this device is that the plastics crown cannot be taken off the gypsum die without undergoing damage, since its upper part is wider than the lower part of the tooth.

United States Patent No. 4,162,625 discloses an apparatus for forming dental copings (that is thin metal mouldings) about which a tooth preparation is to be cast in forming dental crowns, which comprises opposed first and second compression members having respectively opposed pliable compression surfaces, a tooth die attachable to the surface of one compression member at its pliable surface and compression means for urging the compression members together so that a sheet of coping material such as platinum foil placed between the compression members is deformed to substantially conform to the shape of the tooth die. The pliable nature of the opposed surfaces causes substantially uniform pressure to be applied to the coping and tooth die thereby allowing the coping to be attached to and conform substantially to the die without tearing. The crown formed on the die is a relatively robust element whose removal from the die does not cause the same problems as the removal of a moulded plastics temporary dental crown from a die.

The production of plastics temporary dental crowns in fact belongs more to the plastics forming art such as the use of a vacuum press as already mentioned. The use of resilient dies is known for example from US—A—3,470,291 which discloses a shaping apparatus for a plastics sheet which comprises a rigid upper die and yieldable lower die which comprises an elastic ring inside a matrix. A limit on the extent of displacement into the elastic ring is provided by a rigid plate over the elastic ring whose internal opening is matched to the diameter of the upper rigid die.

An object of this invention is to provide a device which will enable production of temporary dental crowns which have a shape that closely approximates the shape of the tooth being restored to be effected, which dental crown may easily be taken off the die on which it has been produced without undergoing any damage.

According to the present invention, there is provided a device for producing a temporary dental crown from a plastics foil, which consists of a die-carrying plunger, a cup-shaped matrix having a recess to be entered by the die, the die corresponding in shape to an artificial tooth, and the matrix being held on a support member in axial alignment with both a holder carried by the support member as well as with the plunger to one end of which plunger the die is attached, which plunger is part of the holder, and means for effecting reciprocating movement of the plunger, wherein an elastic ring is positioned in the recess of the matrix as a resilient countersupport for the die and plastics foil driven thereinto, in use, which elastic ring has an internal diameter smaller than the maximum cross-sectional diameter of the die, the recess opens out at the open end of the matrix into a recess of greater transverse cross-sectional area concentric with the recess, acting as a guide and support for the plastics foil as it is driven into the elastic ring and flanked at at least part of its circumference by a flange, and an elastically deformable diaphragm is held in a cylindrical member concentric with the plunger so as to lie transversely across the path of the die at a location between the die and the matrix, the cylindrical member being capable of undergoing reciprocating movement on displacement of the plunger and sized to enter the recess of the matrix to provide an initial pressing of the plastics foil into the recess by the diaphragm.

With a device embodying the invention, as with US—A—4,162,625, the die may be replaceable so that an artificial tooth having a shape closely approximating that of the tooth being restored can be utilised in producing the artificial tooth. The elastic ring placed in the recess in the matrix presses the plastics foil from outside and has an internal diameter smaller than the size of the lower part of the tooth being restored. However the elastic ring holds the plastics crown which is formed in its opening when retraction of the die and diaphragm have taken place so that the crown can be removed easily ready for use.

For achieving the required reciprocating movement between the plunger carrying the die and cylinder carrying the diaphragm and the matrix, the cylinder is preferably concentric with a sleeve therearound carrying a flange by which the holder is attached to the support member, with the plunger having a portion of increased cross-sectional area at the end opposite that at which the die is carried, a resilient biassing means, such as a coil spring being positioned between the portion of increased diameter and an abutment on the cylinder. A further resilient biassing means, likewise usually a cylindrical spring, may be positioned between the abutment means and abutment means positioned on the sleeve between the first identified abutment means and the flange. More particularly, the abutment means on the cylinder may be a nut attached to the cylinder to form an annular recess therebetween and the plunger entered by a cylindrical spring held therebetween and a button-shaped member on the end of the plunger.

The advantages of a device embodying the invention are the following. It is possible to produce temporary plastics dental crowns which closely approximate the shape of a tooth being restored. Moreover it is very easy to remove the crown from the matrix and the die without undergoing damage.

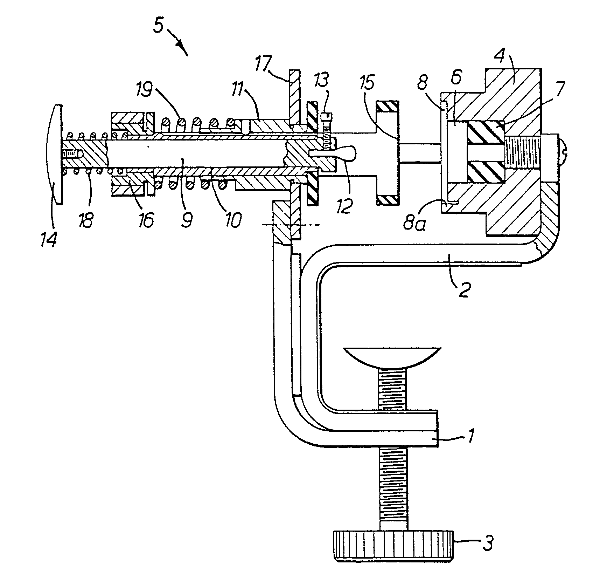

For a better understanding of the invention and to show how the same can be carried into effect, reference will now be made, by way of example only, to the accompanying drawing which is a longitudinal section through a device embodying this invention for the production of temporary dental crowns.

Referring to the drawing, the device comprises a support 1 to which is attached a body portion 2 by means of a fixing screw 3. A matrix 4 and a holder 5 in opposed juxtaposition are mounted on the body portion 2. The matrix 4 is cup-shaped and provided with a recess 6 into which an elastic ring 7 whose opening is coaxial and concentric therewith is placed, the size of its opening being smaller than that of the lower part of the tooth being restored. The surface of the opening in the ring 7 is to impart external pressure on a plastics foil while the temporary dental crown is being made. Concentrically surrounding the recess 6 at the open end of the matrix is an outer recess or socket 8 around the periphery of which is an upstanding flange 8a. The holder 5 comprises arranged concentrically in each other, a plunger 9, surrounded by a cylinder 10 in a sleeve 11. The shaft of a die 12 is affixed to one of the ends of the plunger 9 with the aid of a grub screw 13, while the opposite end of the plunger 9 is shaped as a push-button 14. The cylinder 10 is closed at one end by a diaphragm 15 and by a nut 16 at the other end. A flange 17 is attached to the sleeve 11 and serves to connect the holder 5 to the support 1. A spring 18 is disposed between a recess formed between the nut 16 and the plunger 9 on the one hand and the undersurface of the push-button 14. A spring 19 is disposed between the end of the nut 16 opposite to that formed with the aforementioned recess and a bearing face of the sleeve 11.

The device operates as follows. The device is attached to a table by means of the support 1 and the screw 3. An artificial tooth is selected which will serve as a die 12, this tooth having a shape that closely approximates the shape of the tooth being restored, and it may be additionally machined in order to achieve the individual characteristics of the tooth. The die 12 thus produced is fixed to the plunger 9 by the screw 13. Plastics foil, which has been pre-heated, is placed against the matrix 4. The push-button 14 is pushed and an initial pressing of the foil into the recess 8 by the diaphragm 15 is achieved, the end of the cylinder 10 in which the diaphragm is fitted being sized to enter the recess 8. The die 12 together with the plastics foil are then pushed into the opening in the elastic ring 7 as the plunger 9 undergoes further displacement. As a result of the pressing force of the elastic ring 7 on the matrix 4, the foil takes the shape of the die 12. The push-button 14 is then released and the springs 18 and 19 sequentially return the die 12 and the diaphragm 15 to their initial positions. The plastics crown remains in the opening of the elastic ring 7, whence it can easily be removed ready for use.

**Claims**

1. A device for producing a temporary dental crown from a plastics foil, which consists of a die-carrying plunger (9), and cup-shaped matrix (4) having a recess to be entered by the die, the die corresponding in shape to an artificial tooth, and the matrix (4) being held on a support member (1) in axial alignment with both a holder (5) carried by the support member as well as with the plunger (9) to one end of which plunger the die (12) is attached, which plunger is part of the holder, and means (14) for effecting reciprocating movement of the plunger, characterised in that an elastic ring (7) is positioned in the recess (6) of the matrix (4) as a resilient countersupport for the die and plastics foil driven thereinto, in use, which elastic ring has an internal diameter smaller than the maximum cross-sectional diameter of the die, in that the recess (6) opens out at the open end of the matrix (4) into a recess (8) of greater transverse cross-sectional area concentric with the recess (6) acting as a guide and support for the plastics foil as it is driven into the elastic ring (7) and flanked at at least part of its circumference by a flange (8a), and in that an elastically deformable diaphragm (15) is held in a cylindrical member (10) concentric with the plunger (9) so as to lie transversely across the path of the die (12) at a location between the die (12) and the matrix (4), the cylindrical member (10) being capable of undergoing reciprocating movement on displacement of the plunger (9) and sized to enter the recess (8) of the matrix (4) to provide an initial pressing of the plastics foil into the recess (8) by the diaphragm (15).

2. A device according to claim 1, characterised in that the cylinder (10) is concentric with a sleeve (11) therearound and carries a flange (17) by which the holder (5) is attached to the support member, in that the plunger (9) has a portion (14) of increased cross-sectional area at its other end, a resilient biasing means (18) being positioned between said portion (14) and abutment means (16) on the cylinder (10), while a further resilient biasing means (19) is positioned between said abutment means and abutment means position on the sleeve (11) between the abutment means (16) and the flange (17).

3. A device according to claim 2, characterised in that the abutment means (16) is a nut attached to the cylinder (10) to form an annular recess therebetween and the plunger (9) entered by a spring (18) held therebetween and a button-shaped member (14) on the end of the plunger (9).

**Patentansprüche**

1. Vorrichtung zur Herstellung einer temporären Zahnkrone aus einer Kunststoffolie, welche aus einem eine Patrize tragenden Stößel (9), aus einer becherförmigen Matrize (4), die eine Aussparung aufweist, in die die Patrize eintritt, welche in der Form einem künstlichen Zahn entspricht, wobei die Matrize (4) an einem Trägerelement (1) in axialer Ausrichtung sowohl zu einem an dem Trägerelement gelagerten Halter (5) als auch zu dem Stößel (9) gehalten ist, wobei an einem Ende des Stößels die Patrize (12) befestigt ist und der Stößel einen Teil des Halters bildet, und aus einer Einrichtung (14) zur Bewirkung einer Hin- und Herbewegung des Stößels besteht, dadurch gekennzeichnet, daß in der Ausnehmung (6) der Matrize (4) ein elastischer Ring (7) als federnde Gegenhalterung für die Patrize und die in sie bei Benutzung hineingedrückte Kunststoffolie positioniert ist, wobei der elastische Ring einen Innendurchmesser hat, der kleiner ist als der maximale Querschnittsdurchmesser der Patrize, daß die Aussparung (6) am offenen Ende der Matrize (4) in eine Ausnehmung (8) mit größerer, sich quer erstreckender Querschnittsfläche konzentrisch zur Aussparung (6) mündet und als Führung und Lagerung für die Kunststoffolie wirkt, wenn sie in den elastischen Ring (7) gedrückt wird und auf wenigstens einem Teil ihres Umfangs von einem Flansch (8a) flankiert ist, und daß ein elastisch verformbarer Rahmen (15) in einem zylindrischen Element (10) konzentrisch zum Stößel (9) so gehalten wird, daß er quer zum Weg der Patrize (12) an einer Stelle zwischen der Patrize (12) und der Matrize (4) liegt, wobei das zylindrische Element (10) in der Lage ist, eine Hin- und Herbewegung bei einer Verschiebung des Stößels (9) auszuführen und so bemessen ist, daß es in die Aussparung (8) der Matrize (4) eintreten kann, um für ein anfängliches Pressen der Kunststoffolie in die Aussparung (8) durch den Rahmen (15) zu sorgen.

2. Vorrichtung nach Anspruch 1, dadurch gekennzeichnet, daß der Zylinder (10) zu einer ihn umgebenden Hülse (11) konzentrisch ist und einen Flansch (17) trägt, mit welchem der Halter (5) an dem Lagerelement befestigt ist, daß der Stößel (9) einen Abschnitt (14) mit vergrößerter Querschnittsfläche an seinem anderen Ende hat, und daß zwischen einem Abschnitt (14) und einer Anschlageinrichtung (16) am Zylinder (10) eine Vorspanneinrichtung (18) angeordnet ist, während eine weitere elastische Vorspanneinrichtung (19) zwischen der Anschlageinrichtung und einer Anschlageinrichtungsposition an der Hülse (11) zwischen der Anschlageinrichtung (16) und dem Flansch (17) positioniert ist.

3. Vorrichtung nach Anspruch 2, dadurch gekennzeichnet, daß die Anschlageinrichtung (16) eine Mutter ist, die an dem Zylinder (10) befestigt ist und eine ringförmige Aussparung zwischen sich und dem Stößel (9) aufweist, in die eine Feder (18) eintritt, die zwischen ihr und einem knopfförmigen Element (14) am Ende des Stößels (9) gehalten ist.

**Revendications**

1. Dispositif pour la fabrication d'une couronne dentaire provisoire à partir d'une feuille de matière plastique, qui comprend un piston de compression (9) portant un organe d'estampage, une matrice en forme de coupelle (4) possèdant une cavité dans laquelle l'organe d'estampage est destiné à pénétrer, l'organe d'estampage ayant une forme correspondant à celle d'une dent artificielle, et la matrice (4) étant maintenue sur un élément de support (1), en alignement axial avec un ensemble de serrage (5) porté par l'élément de support ainsi qu'avec le piston de compression (9) sur une première extrémité duquel est fixé l'organe d'estampage (12), ce piston de compression faisant partie de l'ensemble der serrage, et des moyens (14) pour animer le piston de compression d'un mouvement de va-et-vient, caractérisé en ce qu'une bague élastique (7) est positionnée dans la cavité (6) de la matrice (4) pour, en service, agir comme un contre-appui élastique pour l'organe d'estampage et la feuille de matière plastique entraînée dans la cavité, cette bague élastique présentant un diamètre intérieur inférieur au diamètre maximum de la section transversale de l'organe d'estampage, en ce que la cavité (6) débouche, à l'extrémité ouverte de la matrice (4), dans un renfoncement (8) ayant une section transversale de plus grande surface, et concentrique avec la cavité (6), ce renfoncement jouant le rôle d'un guide et d'un support pour la feuille de matière plastique au fur et à mesure qu'elle est entraînée dans la bague élastique (7) et étant bordé, sur au moins une partie de sa circonférence, par une collerette (8a), et en ce qu'un diaphragme élastiquement déformable (15) est maintenu dans un élément cylindrique (10) concentrique avec le piston de compression (9) de façon à être placé transversalement au trajet de l'organe d'estampage (12), en un point situé entre l'organe d'estampage (12) et la matrice (4), l'élément cylindrique (10) étant apte à subir un mouvement de va-et-vient lors du déplacement du piston de compression (9) et étant dimensionné pour pouvoir pénétrer dans le renfoncement (8) de la matrice (4) afin qu'un pressage initial de la feuille de matière plastique puisse être réalisé dans le renfoncement (8) par le diaphragme (15).

2. Dispositif selon la revendication 1, caractérisé en ce que le cylindre (10) est concentrique avec une douille (11) qui l'entoure et porte une collerette (17) par laquelle l'ensemble de serrage (5) est fixé à l'élément de support, en ce que le piston de compression (9) comporte une partie (14) de section transversale agrandie sur sa seconde extrémité, un organe élastique de contrainte (18) étant positionné entre ladite partie (14) et un élément d'appui (16) formé sur le cylindre (10), tandis qu'un second organe élastique de contrainte (19) est positionné entre ledit élément d'appui et un élément d'appui situé sur la douille (11) entre l'élément d'appui (16) et la collerette (17).

3. Dispositif selon la revendication 2, caractérisé en ce que l'élément d'appui (16) est constitué par un écrou fixé sur le cylindre (10) de manière à délimiter, avec le piston de compression (9), un évidement annulaire dans lequel pénètre un ressort (18) maintenu entre cet évidement et un élément en forme de bouton (14) disposé à l'extrémité du piston de compression (9).